# EUROPÄISCHE PATENTSCHRIFT

(11) **EP 3 019 765 B1**
(45) Veröffentlichungstag und Bekanntmachung des Hinweises auf die Patenterteilung: **06.09.2017**
(21) Anmeldenummer: 14736398.0
(22) Anmeldetag: 08.07.2014
(51) Int. Cl.: F16D 65/56, F16D 55/2255, F16D 66/00

(54) **VERFAHREN ZUM ERMITTELN EINES LÜFTSPIELS EINER FAHRZEUGBREMSE UND FAHRZEUGBREMSE MIT EINER VORRICHTUNG ZUR ERMITTLUNG EINES LÜFTSPIELS**
METHOD FOR DETERMINING AN AIR GAP OF A VEHICLE BRAKE AND VEHICLE BRAKE HAVING A DEVICE FOR DETERMINING AN AIR GAP
PROCÉDÉ PERMETTANT DE DÉTERMINER UN JEU D'UN FREIN DE VÉHICULE AUTOMOBILE ET FREIN DE VÉHICULE AUTOMOBILE POURVU D'UN DISPOSITIF PERMETTANT DE DÉTERMINER UN JEU

(30) Priorität: 12.07.2013 DE 102013012104
(43) Veröffentlichungstag der Anmeldung: 18.05.2016
(73) Patentinhaber: KNORR-BREMSE Systeme für Nutzfahrzeuge GmbH, 80809 München (DE)
(72) Erfinder: STAAHL, Christian, 81929 München (DE); KLIEGL, Thomas, 71334 Waiblingen (DE)
(86) Internationale Anmeldenummer: PCT/EP2014/064499
(87) Internationale Veröffentlichungsnummer: WO 2015/004084

(56) Entgegenhaltungen:
- WO-A1-01/68428
- DE-A1- 19 751 445
- US-A1- 2009 281 702

## Beschreibung

Die Erfindung betrifft ein Verfahren zum Ermitteln eines Lüftspiels einer Fahrzeugbremse nach dem Oberbegriff des Anspruchs 1. Die Erfindung bezieht sich auch auf eine Fahrzeugbremse mit einer Vorrichtung zur Ermittlung eines Lüftspiels.

Eine Fahrzeugbremse kann z.B. eine Scheiben- oder Trommelbremse sein. Es sind unterschiedliche Betätigungsarten, z.B. pneumatisch, hydraulisch, elektrisch und auch Kombinationen daraus, in Verwendung. Bei allen Arten ist ein Lüftspiel, d.h. ein Abstand zwischen einem Bremsbelag und einer Bremsscheibe (Scheibenbremse) bzw. einer Trommel (Trommelbremse) je nach Bremsenaufbau in engen Grenzen ausgelegt. So liegt ein Lüftspiel zwischen Bremsbelag und Bremsscheibe bei einer Nutzfahrzeugscheibenbremse in einem Bereich von ca. 0,6...1,1 mm. Es wird angestrebt, dieses Soll-Lüftspiel, das sich aufgrund von Verschleiß und anderer Einwirkungen verändert, in diesem vorgegebenen Bereich zu halten, um einerseits zu großen Verschleiß und andererseits einen höheren Kraftstoffverbrauch zu vermeiden.

Es gibt Sensoreinrichtungen zur Erfassung eines Betätigungshubs einer Zuspannvorrichtung einer Fahrzeugbremse, um damit ein aktuelles Lüftspiel zu bestimmen. Eine Zuspannvorrichtung ist z.B. ein Bremsdrehhebel, dessen Verschwenkwinkel als Betätigungshub erfassbar ist. Es ist auch möglich, z.B. den Verstellweg eines Kolbens eines Bremszylinders als Betätigungshub zu erfassen.

Fahrzeugbremsen, insbesondere für Kraftfahrzeuge, sind üblicherweise mit automatisch wirkenden, mechanischen Verschleißnachstellvorrichtungen ausgestattet. Diese Verschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement der Zuspannvorrichtung, aktiviert. Bei Verschleiß von Bremsbelägen und Bremsscheibe bei einer Scheibenbremse erfolgt ein automatisches Nachstellen der Beläge mittels der Verschleißnachstellvorrichtung z.B. durch eine Verstellbewegung von längenveränderlichen Gewinderohren.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Gewinderohrs weitergeleitet.

Die DE 102010032515 A1 beschreibt einen Bremsverschleißsensor einer Scheibenbremse. Hierbei wird eine Überlagerung von Nachstellweg und Betätigungshub mittels eines Planetengetriebes realisiert. Der Nachstellweg wird als eine Verdrehbewegung auf das Sonnenrad des Planetengetriebes eingeleitet. Hierfür bietet sich z.B. die Verdrehbewegung der/einer Nachstellspindel an. Der Betätigungshub wird als eine weitere Verdrehbewegung über den Planetenträger des Planetengetriebes eingeleitet. Die Verdrehung des Hohlrades des Planetengetriebes wird mit einem geeigneten Aufnehmer, z.B. einem Hall-Sensor, einem Potentiometer, einem induktiven, optischen oder akustischen Geberelement, erfasst. Somit entstehen auf dem Hohlrad infolge der zwei Eingangsgrößen Ausschlagamplituden von beiden erfassten Größen und können mit dem Aufnehmer mit einem zur notwendigen Auflösung angepassten Messbereich verwendet werden.

Dokument DE 197 51 445 A1 offenbart ein Verfahren zum Ermitteln eines Lüftspiels einer Fahrzeugbremse nach dem Oberbegriff des Anspruchs 1.

Aufgrund der ständig wachsenden Anforderungen, Kosten zu reduzieren, wobei gleichzeitig Qualität und Nutzen nicht nur beibehalten sondern erhöht werden sollen und außerdem Wartungskosten zu verringern sind, ergibt sich ein dementsprechender Bedarf für ein verbessertes Verfahren zum Ermitteln eines Lüftspiels einer Fahrzeugbremse.

Ein Lüftspiel kann durch unterschiedliche Störeinflüsse über der Laufzeit verändert werden.

Daher besteht die Aufgabe der vorliegenden Erfindung darin, ein verbessertes Verfahren zum Ermitteln eines Lüftspiels einer Fahrzeugbremse bereitzustellen. Eine weitere Aufgabe ist es, eine verbesserte Fahrzeugbremse zu schaffen.

Die Aufgabe wird durch ein Verfahren mit den Merkmalen des Anspruchs 1 gelöst.

Die Aufgabe wird auch durch eine Fahrzeugbremse mit den Merkmalen des Anspruchs 10 gelöst.

Es wird ein Verfahren zum Ermitteln eines Lüftspiels geschaffen, welches anhand von aufgenommenen Messwerten eines Betätigungshubs eine zeitliche Ableitung der Messwerte zum Ermitteln des Lüftspiels bestimmt.

Ein erfindungsgemäßes Verfahren zum Ermitteln eines Lüftspiels einer Fahrzeugbremse, insbesondere für ein Kraftfahrzeug, wobei die Fahrzeugbremse eine Zuspannvorrichtung, eine Verschleißnachstellvorrichtung, eine Sensoreinrichtung zur Erfassung eines Betätigungshubs der Zuspannvorrichtung und ein Fahrzeugsteuerungssystem aufweist, wird bereitgestellt. Es umfasst die Verfahrensschritte (S1) Aufnehmen eines Messsignals des Betätigungshubs, welches von der Sensoreinrichtung bereitgestellt wird, innerhalb eines vorher festlegbaren Zeitfensters während eines Bremsvorgangs und Speichern des Messsignals als Datenpaare Betätigungshub-Zeit während eines Bremsvorgangs; (S2) Bilden einer zeitlichen Ableitung des Messsignals in dem Zeitfenster mit einem geeigneten Algorithmus zur Bestimmung eines Zeitpunkts bei einem Maximum; und (S3) Ermitteln des Lüftspiels anhand des so bestimmten Zeitpunkts und Weiterleiten des so ermittelten Wertes des Lüftspiels an das Fahrzeugsteuerungssystem.

Auf diese Weise ist es möglich, eine Überwachung des Lüftspiels zu schaffen, wobei eine Anzeige des ermittelten Lüftspiels einen Fahrer schnell über eine Abweichung informieren kann. Dann können ggf. Gegenmaßnahmen eingeleitet werden, wodurch spätere große Reparaturkosten vermindert oder sogar unnötige gemacht werden.

Das Lüftspiel kann so möglichst genau und robust, d.h. ohne Einfluss von Störgrößen bestimmt werden.

Eine erfindungsgemäße Fahrzeugbremse, insbesondere für ein Kraftfahrzeug, weist eine Zuspannvorrichtung, eine Verschleißnachstellvorrichtung, eine Sensoreinrichtung zur Erfassung eines Betätigungshubs der Zuspannvorrichtung, ein Fahrzeugsteuerungssystem und eine Vorrichtung zur Ermittlung eines Lüftspiels auf. Die Vorrichtung zur Ermittlung des Lüftspiels ist zur Durchführung des erfindungsgemäßen Verfahrens ausgebildet.

So wird es ermöglicht, dass Nachteile, wie z.B. Einfluss eines Ansprechdrucks einer pneumatischen Bremse und Steifigkeit der Bremse, einen geringen bis vernachlässigbaren Einfluss auf die Ermittlung des Lüftspiels haben. Vor allem die Steifigkeit der Bremse erfährt große Schwankungen durch den Belagverschleiß und die Belagtemperatur. Bei der erfindungsgemäßen Fahrzeugbremse sind keine ausreichend genauen Annahmen bzgl. Steifigkeit und Ansprechdruck erforderlich.

Weitere vorteilhafte Ausgestaltungen sind in den Unteransprüchen angegeben.

In einer Ausführung wird das von der Sensoreinrichtung bereitgestellte Messsignal des Betätigungshubs von einer Überwachungseinheit als analoges Messsignal an eine Auswerteeinheit übertragen. Damit dies auf einem möglichst kurzen Weg zur Verminderung von Störgrößeneinflüssen erfolgt, kann die Überwachungseinheit in der Sensoreinrichtung integriert sein und nur eine kurze Verbindung zu einer Auswerteeinheit aufweisen bzw. mit dieser zusammen angeordnet sein.

Es ist in einer weiteren Ausführung vorgesehen, dass der Verfahrensschritt (S1) Aufnehmen die Teilschritte aufweist:
(S1.1) Festlegen eines Beginns des Zeitfensters durch den Beginn eines Bremsvorgangs, der durch einen Fahrer durch eine Betätigung des Bremspedals eingeleitet wird; (S1.2) Aktivieren der Überwachungseinheit zu Beginn des Zeitfensters durch ein Bremssteuerungssystem, das sich im Fahrzeugsteuerungssystem befindet; (S1.3) Übertragen des analogen Messsignals durch die so aktivierte Überwachungseinheit die Auswerteeinheit; (S1.4) Umsetzen des übertragenen analogen Messsignals des Betätigungshubs durch die Auswerteeinheit in ein digitales Messsignal und Speichern dieses digitalen Messsignals als Datenpaare Betätigungshub-Zeit während eines Bremsvorgangs; und (S1.5) Fortführen des Teilschritts (S1.4) Umsetzen und Speichern des Messsignals als Datenpaare Betätigungshub-Zeit während eines Bremsvorgangs durch die Auswerteeinheit für die vorher festgelegte Zeit des Zeitfensters. Durch das Umsetzen des analogen Messsignals in ein digitales Messsignal ist eine leichtere Verarbeitung möglich. Außerdem kann durch das Speichern als Datenpaare Betätigungshub-Zeit während eines Bremsvorgangs des Messsignals eine weitere Bearbeitung erfolgen.

Dabei ist es vorteilhaft, wenn in dem Teilschritt (S1.4) Umsetzen und in dem Teilschritt (S1.5) Fortführen das Umsetzen des übertragenen analogen Messsignals des Betätigungshubs in ein digitales Messsignal mit einer hohen Abtastrate erfolgt. Damit ist es auch möglich, das erfindungsgemäße Verfahren bei hydraulisch betätigten Fahrzeugbremsen einzusetzen, welche so genannte kürzere Schwellzeiten aufweisen. Damit wird der Einsatzbereich vergrößert.

Weiterhin ist vorgesehen, dass in dem Teilschritt (S1.5) Fortführen das Umsetzen und Speichern des Messsignals als Datenpaare Betätigungshub-Zeit während eines Bremsvorgangs an einem Endzeitpunkt des vorher festgelegten Zeitfensters unterbrochen wird, wenn der begonnene Bremsvorgang noch nicht abgeschlossen ist. Dadurch wird die Umsetzzeit begrenzt und eine schnelle Auswertung ermöglicht. Bei kürzeren Bremsvorgängen kann in dem Teilschritt (S1.5) Fortführen das Umsetzen und Speichern des Messsignals als Datenpaare Betätigungshub-Zeit während eines Bremsvorgangs zu dem Zeitpunkt unterbrochen werden, an welchem der begonnene Bremsvorgang innerhalb des vorher festgelegten Zeitfensters abgeschlossen wird.

In einer noch weiteren Ausführung weist der Verfahrensschritt (S2) Bilden einer zeitlichen Ableitung folgende Teilschritte auf: (S2.1) Aufbereiten der gespeicherten Daten des Messsignals als Datenpaare Betätigungshub-Zeit während eines Bremsvorgangs durch die Auswerteeinheit durch Glätten und Filtern der gespeicherten Daten des Messsignals; (S2.2) Bilden der zeitlichen Ableitung der gespeicherten Daten des Messsignals in dem Zeitfenster mit einem geeigneten Algorithmus durch die Auswerteeinheit; und (S2.3) Bestimmen des Zeitpunkts bei dem Maximum der so gebildeten zeitlichen Ableitung durch die Auswerteeinheit. Durch die zeitliche Ableitung wird eine Überwachung und Analyse der Betätigungsgeschwindigkeit möglich, woraus sich durch eine einfache Auswertung des Maximums das aktuelle Lüftspiel ermitteln lässt. Hierzu ist nur ein softwaremäßiger Rechenalgorithmus erforderlich, der keine Hardwareänderungen bzw. Erweiterungen der Fahrzeugbremse erforderlich macht.

In einer Ausführung weist der Verfahrensschritt (S3) Ermitteln des Lüftspiels folgende Teilschritte auf:
(S3.1) Ermitteln des Wertes des Lüftspiels anhand des Zeitpunkts und anhand der gespeicherten Daten des Betätigungshubs von der Auswerteeinheit; (S3.2) Anpassen des so ermittelten Wertes des Lüftspiels durch die Auswerteeinheit zur Weiterleitung von der Auswerteeinheit an das Fahrzeugsteuerungssystem; und
(S3.3) Anzeigen des ermittelten und angepassten Wertes des Lüftspiels. Da die gespeicherten Daten des Messsignals des Betätigungshubs als Datenpaare eines Betätigungshubwertes und einer zugeordneten Zeit somit über einen gewählten Zeitpunkt abrufbar sind, ist eine einfache Ermittlung des Lüftspiels anhand des Zeitpunkts des Maximums möglich.

In einer anderen Ausführung wird der ermittelte und angepasste Wert des Lüftspiels von dem Fahrzeugsteuerungssystem an ein zentrales Steuergerät des Fahrzeugsteuerungssystems zur Speicherung und späteren Auswertung übertragen. Dadurch lassen sich ein aktuelles Lüftspiel anzeigen und ggf. zeitnahe Gegenmaßnahmen ergreifen.

In einer Ausführung der Fahrzeugbremse umfasst die Vorrichtung zur Ermittlung des Lüftspiels die Sensoreinrichtung, eine mit der Sensoreinrichtung gekoppelte Überwachungseinheit und eine mit dem Fahrzeugsteuerungssystem gekoppelte Auswerteeinheit. Dies ist ein kompakter Aufbau, welcher einen Einbauraum der Fahrzeugbremse nicht wesentlich vergrößert.

Eine weitere Ausführung sieht vor, dass die Überwachungseinheit mit einem Aufnehmer der Sensoreinrichtung elektrisch verbunden und für eine analoge Übertragung des aufgenommenen Messsignals des Aufnehmers an die Auswerteeinheit ausgebildet ist. Dabei ist es vorteilhaft, wenn die Überwachungseinheit in die Sensoreinrichtung integriert ist.

In einer Alternative ist vorgesehen, dass die Überwachungseinheit mit einem Aufnehmer der Sensoreinrichtung elektrisch verbunden ist, für eine Überwachung bzw. Analyse des Ausgangssignals des Aufnehmers dergestalt ausgebildet ist, dass, wenn der Aufnehmer für zwei unterschiedliche Messgrößen bereitstellt, die Überwachungseinheit die erfasste Messgröße des Betätigungshubs von der anderen erfassten Messgröße trennt und für eine analoge Übertragung des aufgenommenen und getrennten Messsignals des Aufnehmers an die Auswerteeinheit ausgebildet ist. So wird ein Einsatzbereich erweitert.

In noch einer weiteren Ausführung ist die Auswerteeinheit für eine Umsetzung des übertragenen analogen Messsignals des Betätigungshubs durch die Auswerteeinheit in ein digitales Messsignal als A/D (Analog/Digital) -Umsetzer und Speichern dieses digitalen Messsignals als Datenpaare Betätigungshub-Zeit in einer Speichereinrichtung ausgebildet. Die Speichereinrichtung ist vorzugsweise ein Bestandteil der Auswerteeinheit.

In einer Ausführung ist vorgesehen, dass die Auswerteeinheit für eine Bildung der zeitlichen Ableitung der gespeicherten Daten des Messsignals des Betätigungshubs der Datenpaare Betätigungshub-Zeit und für ein Bestimmen eines Zeitpunkts bei dem Maximum der gebildeten zeitlichen Ableitung ausgebildet ist. Dies kann z.B. softwaremäßig realisiert sein, wobei ein zusätzlicher Raumbedarf nicht erforderlich bzw. vernachlässigbar ist.

Die Fahrzeugbremse kann eine druckluftbetätigte Scheibenbremse sein.

Natürlich kann das erfindungsgemäße Verfahren nicht nur bei einer pneumatisch betätigten Scheibenbremse angewendet werden. So ist es z.B. auch bei pneumatischen Trommelbremsen und auch bei hydraulischen Scheiben- und Trommelbremsen einsetzbar.

Die Erfindung wird nun anhand einer beispielhaften Ausführung mit Bezug auf die beigefügten Zeichnungen näher erläutert. Hierbei zeigen:
- Fig. 1: eine schematische Teilschnittansicht eines Ausführungsbeispiels einer erfindungsgemäßen Fahrzeugbremse mit einer erfindungsgemäßen Vorrichtung;
- Fig. 2: eine schematische Schnittansicht des Ausführungsbeispiels längs der Linie II-II nach Fig. 1;
- Fig. 3: eine schematische grafische Darstellung eines Betätigungshubs und einer Betätigungsgeschwindigkeit;
- Fig. 4: eine schematische Blockdarstellung der erfindungsgemäßen Fahrzeugbremse nach Fig. 2 mit der erfindungsgemäßen Vorrichtung; und
- Fig. 5 - 6: beispielhafte Flussdiagramme eines erfindungsgemäßen Verfahrens.

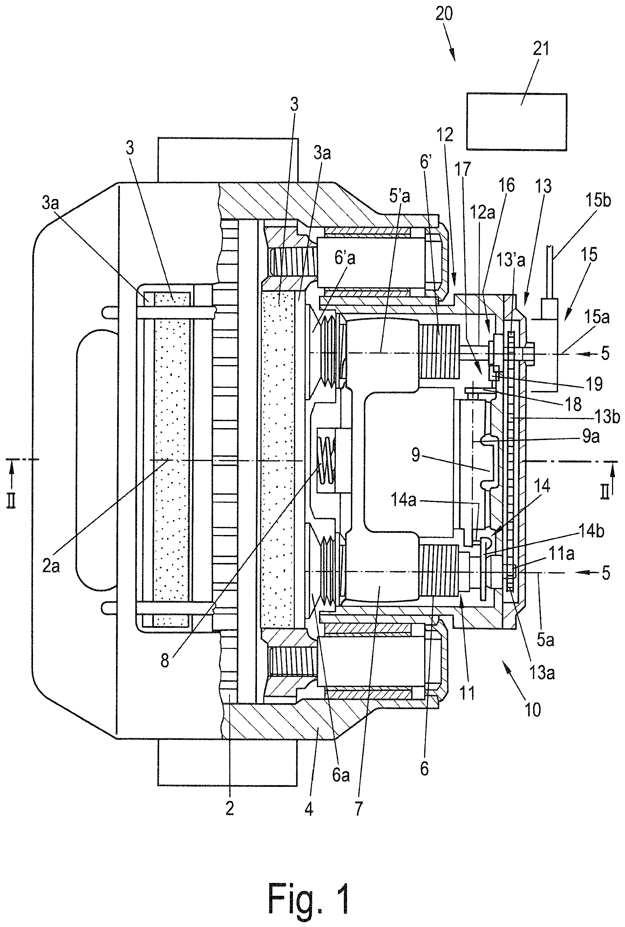

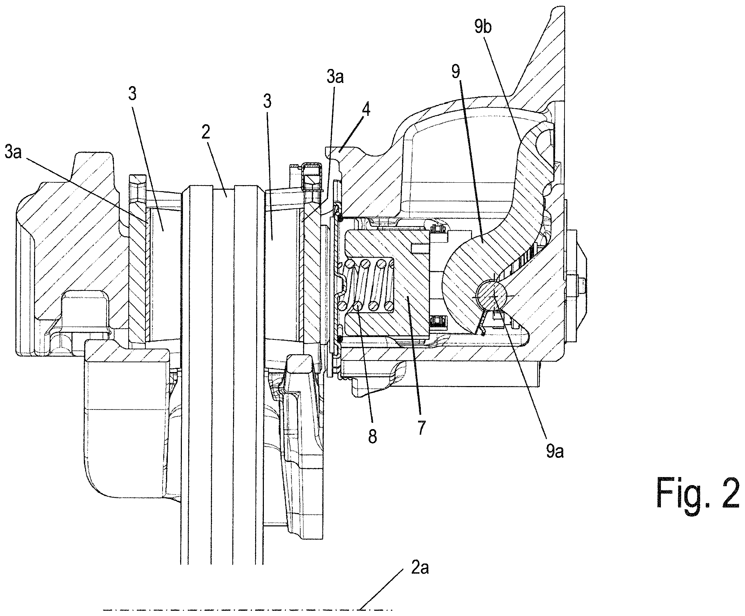

In Fig. 1 ist eine schematische Perspektivansicht eines Ausführungsbeispiels einer erfindungsgemäßen Fahrzeugbremse mit einer erfindungsgemäßen Vorrichtung 20 zur Ermittlung eines Lüftspiels der Fahrzeugbremse dargestellt. Fig. 2 zeigt eine schematische Schnittansicht des Ausführungsbeispiels längs der Linie II-II nach Fig. 1.

Die Fahrzeugbremse ist in diesem Beispiel eine zweistempelige Scheibenbremse 1 mit einem Bremssattel 4, welcher eine Bremsscheibe 2 übergreift. Die Bremsscheibe 2 ist um eine Bremscheibenachse 2a drehbar, wobei beidseitig der Bremsscheibe 2 jeweils ein Bremsbelag 3 auf einem Bremsbelagträger 3a angeordnet ist. Weiterhin ist die Scheibenbremse 1 mit einer Zuspannvorrichtung, die hier mit einem Bremsdrehhebel 9 ausgeführt ist, ausgebildet. Der Bremsdrehhebel 9 wird auch als Spreizmechanik bezeichnet, ist Teil der Zuspannvorrichtung, ist um eine Hebelschwenkachse 9a verschwenkbar und weist einen Hebelarm 9b auf, welcher z.B. von einem Druckluftbremszylinder betätigbar ist.

Eine Brücke 7 steht mit dem Bremsdrehhebel 9 in Kontakt und ist von diesem beim Zuspannen und Lösen der Scheibenbremse 1 in Richtung der Bremsscheibenachse 2a auf die Bremsscheibe 2 hin und zurück betätigbar. Die Brücke 7 ist an ihren Enden jeweils mit einer Spindeleinheit 5, 5' über jeweils ein Gewinderohr 6, 6' gekoppelt. Jede Spindeleinheit 5, 5' weist eine Achse 5a, 5'a auf, wobei die Achse 5a der Spindeleinheit 5 als Nachstellerachse 5a und die Achse 5'a der Spindeleinheit 5' als Mitnehmerachse 5'a bezeichnet werden.

Die in Fig. 1 links angeordneten Enden der Spindeleinheiten 5, 5', welche zur Bremsscheibe 2 weisen, sind jeweils mit einem Druckstück 6, 6'a versehen. Die Druckstücke 6, 6'a stehen mit einem Bremsbelagträger 3a eines zuspannseitigen Bremsbelags 3 in Kontakt, welcher auf einer Seite der Bremsscheibe 2 der Scheibenbremse 1 angeordnet ist. Auf der anderen Seite der Bremsscheibe 2 ist ein weiterer Bremsbelag 3 mit Bremsbelagträger 3a im Bremssattel 4 festgelegt. Dieser Bremsbelag 3 wird auch reaktionsseitiger Bremsbelag 3 genannt. Der Bremssattel 4 kann beispielsweise ein Schiebesattel sein.

Ein Abstand zwischen einem Bremsbelag 3 und der Bremsscheibe 2 wird als Lüftspiel bezeichnet. Bei einem Bremsvorgang wird bei Betätigung der Scheibenbremse 1 zunächst das Lüftspiel überbrückt, indem der Bremsbelag 3 durch die vom Bremshebel 9 betätigte Brücke 7 gegen die Bremsscheibe 2 der Scheibenbremse 1 verstellt wird. Aufgrund des Verschleißes der Bremsbeläge 3 und auch der Bremsscheibe 2 wird das Lüftspiel vergrößert.

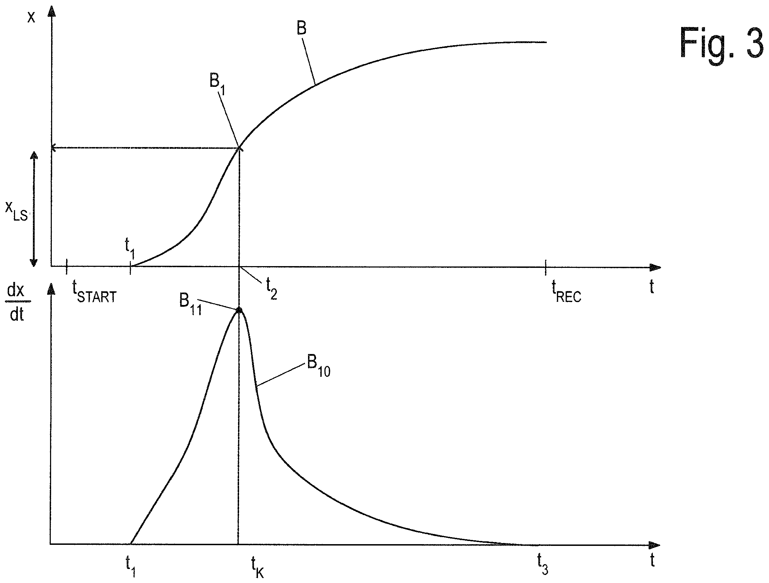

Der Begriff Reibepunkt (B1 in Fig. 3) ist der Punkt, in welchem der Bremsbelag 3 an der Bremsscheibe 2 der Scheibenbremse 1 anliegt. Der Reibepunkt B1 wird beim Zuspannen nach Überbrückung des Lüftspiels erreicht. Weiteres Zuspannen bewirkt dann durch Anpressen des Bremsbelags 3 an die Bremsscheibe 2 eine Bremsung. Dies gilt natürlich auch für den reaktionsseitigen Bremsbelag 3. Ein Lösen der Zuspannvorrichtung bewirkt eine Umkehrung des oben beschriebenen Vorgangs.

Die Scheibenbremse 1 umfasst in der in Fig. 1 gezeigten Ausführung außerdem eine Verschleißnachstellvorrichtung 10, welche zur Nachstellung der Bremsbeläge 3 bei Verschleiß dient, um das ursprüngliche Lüftspiel wiederherzustellen.

Die Verschleißnachstellvorrichtung 10 umfasst eine Nachstelleinrichtung 11 mit einer Nachstellerwelle 11a, einen Mitnehmer 12 mit einer Mitnehmerwelle 12a und eine Synchroneinheit 13 zur Kopplung von Nachstelleinrichtung 11 und Mitnehmer 12.

Die Nachstelleinrichtung 11 wird hier nicht näher erläutert, sie kann z.B. wie in DE 10 2004 037 771 A1 beschrieben ausgebildet sein und ist in der Spindeleinheit 5 in dem zugehörigen Gewinderohr 6 eingesetzt und mit diesem gekoppelt. Eine Längsachse der Nachstellerwelle 11a bildet die Nachstellerachse 5a.

Mittels der Synchroneinheit 13 ist die Nachstelleinrichtung 11 mit dem Mitnehmer 12 derart gekoppelt, dass eine Verdrehung der Nachstellerwelle 11a und des damit drehfest verbundenen Gewinderohrs 6 synchron auf die Mitnehmerwelle 12a und somit auf das mit der Mitnehmerwelle 12a drehfest verbundene Gewinderohr 6' übertragen wird. In Fig. 1 ist die Synchroneinheit 13 nur schematisch dargestellt, wobei die Nachstellerwelle 11a mit einem Synchronrad 13a, hier ein Kettenrad, der Synchroneinheit 13 drehfest verbunden ist. Das Synchronrad 13a steht über ein Synchronmittel 13b, hier eine Kette, mit einem weiteren Synchronrad 13'a, das mit der Mitnehmerwelle 12a direkt oder indirekt drehfest gekoppelt ist, in Verbindung. Diese Ausbildung der Synchroneinheit 13 ist nur beispielhaft zu sehen, andere Kopplungen, z.B. der Gewinderohre 6, 6' untereinander, sind natürlich auch möglich.

Durch jede Zustellbewegung des Bremsdrehhebels 9, bei welcher der Bremsdrehhebel 9 um seine Hebelschwenkachse 9a im Gegenuhrzeigersinn (Fig. 2) verschwenkt, wird die Nachstelleinrichtung 11 angetrieben. Dies erfolgt über einen Nachstellerantrieb 14, der einen mit dem Bremsdrehhebel 9 fest verbundenen Betätiger 14a und ein mit der Nachstelleinrichtung 11 gekoppeltes Nachstellerantriebselement 14b umfasst. Der Betätiger 14a und das Nachstellerantriebselement 14b stehen untereinander in Eingriff. Der Betätiger 14a kann z.B. als Stift ausgebildet sein. Das Nachstellerantriebselement 14b kann z.B. mit einer Schaltgabel versehen sein, die mit dem Betätiger 14a zusammenwirkt.

Wenn bei der Zustellbewegung des Bremsdrehhebels 9 (noch) kein Verschleiß vorliegt, dann erfolgt aufgrund z.B. einer Überlastkupplung der Nachstelleinrichtung 11 keine Übertragung einer Antriebsbewegung auf die Nachstellerwelle 11a. Liegt jedoch ein Verschleiß vor, so wird die Antriebsbewegung auf die Nachstellerwelle 11a der Nachstelleinrichtung 11 übertragen, um den Bremsbelag 3 nachzustellen, wodurch das Lüftspiel auf den ursprünglichen Wert eingestellt wird. Mit der Synchroneinheit 13 wird diese Antriebsbewegung der Nachstellerwelle 11a auf die Mitnehmerwelle 12a übertragen.

Die Vorrichtung 20 zur Ermittlung des Lüftspiels der Fahrzeugbremse weist hier eine Sensoreinrichtung 15, eine Überwachungseinheit 22 und eine Auswerteeinheit 23 auf. In dem in Fig. 1 dargestellten Beispiel ist die Auswerteeinheit 23 in einem Fahrzeugsteuerungssystem 21 angeordnet.

Die Sensoreinrichtung 15 ist hier zur Erfassung einer ersten Messgröße, nämlich des Verschleißes der Bremsbeläge 3 einschließlich der Bremsscheibe 2, und zur Erfassung einer zweiten Messgröße, nämlich eines Betätigungshubs der Zuspannvorrichtung, ausgebildet.

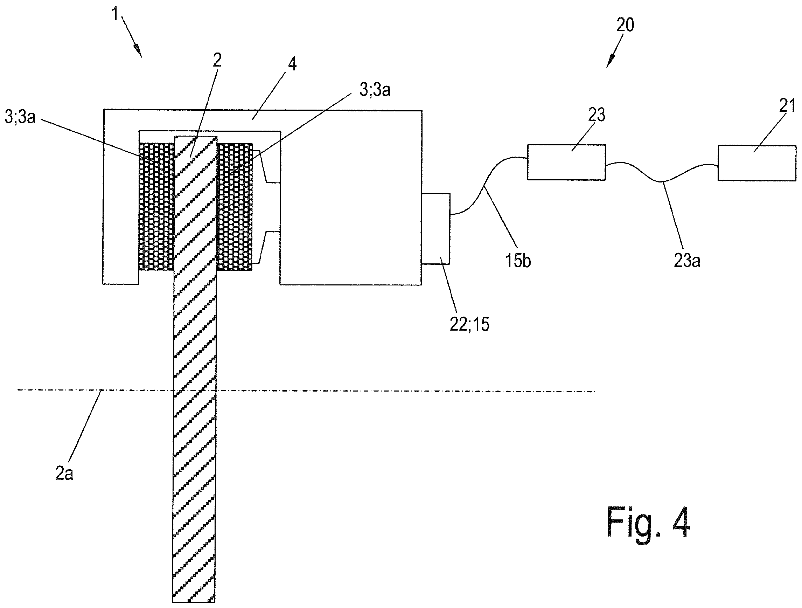

Die Erfassung der ersten Messgröße, nämlich des Verschleißes, erfolgt z.B. durch die Erfassung der Nachstellbewegung der Nachstellerwelle 11a bzw. der Mitnehmerwelle 12a. Dazu ist die Sensoreinrichtung 15 mit einem nicht gezeigten Aufnehmer, z.B. einem Hall-Sensor, einem Potentiometer, einem induktiven, oder/und optischen oder/und akustischen Aufnehmerelement, versehen. Der Aufnehmer ist mit der Überwachungseinheit 22 gekoppelt und hier mit ihr in einem gemeinsamen Gehäuse an der Bremse angeordnet (siehe auch Fig. 4). Eine Anschlussleitung 15b dient zur elektrischen (oder auch optischen) Verbindung mit dem Fahrzeugsteuerungssystem 21 des Fahrzeugs, dem die Fahrzeugbremse zugeordnet ist.

In dem in Fig. 1 gezeigten schematischen Ausführungsbeispiel ist eine Sensorachse 15a der Sensoreinrichtung 15 so angeordnet, dass die Mitnehmerachse 5'a mit der Sensorachse 15a übereinstimmt. Die Sensoreinrichtung 15 ist mit der Mitnehmerwelle 12a gekoppelt. Da die Nachstellbewegung der Nachstellerwelle 11a mittels der Synchroneinheit 13 auf die Mitnehmerwelle 12a übertragen wird, kann hier die Nachstellbewegung der Mitnehmerwelle 12a zur Erfassung des Verschleißes verwendet werden. Die Kopplung mit der Mitnehmerwelle 12a mit der Sensoreinrichtung 15 kann auf verschiedene Weise erfolgen, worauf hier nicht eingegangen werden soll.

Außerdem ist die Sensoreinrichtung 15 in diesem Ausführungsbeispiel derart ausgestaltet, dass sie auch die zweite Messgröße erfassen kann, nämlich einen Betätigungshub der Zuspannvorrichtung der Scheibenbremse 1, welcher hier die Bewegung des Bremsdrehhebels 9 ist. Diese erfassten zwei Messgrößen werden mittels eines Sensorgetriebes 16, das z.B. als ein Überlagerungsgetriebe ausgebildet ist und dazu zwei Eingänge aufweist, überlagert auf den Aufnehmer der Sensoreinrichtung 15 übertragen. Zur allgemeinen Funktion einer solchen Sensoreinrichtung 15 wird auf die Beschreibung in dem Dokument DE 102010032515 A1 verwiesen.

Der Betätigungshub ist eine lineare Bewegung (abgesehen von der Schwenkbewegung der Brücke 7) und wird hier zur Erfassung als zweite Messgröße für die Sensoreinrichtung 15 in eine Dreh- bzw. Schwenkbewegung umgewandelt. Dies erfolgt mittels eines Hubsensorantriebs 17, über welchen die Sensoreinrichtung 15 mit dem Bremsdrehhebel 9 gekoppelt ist. Der Hubsensorantrieb 17 umfasst einen mit dem Bremsdrehhebel 9 verbundenen Hubsensorbetätiger 18 und eine mit der Sensoreinrichtung 15 gekoppelte Hubsensorantriebseinheit 19, die hier nicht weiter erläutert wird.

Die Überwachungseinheit 22 ist mit dem Aufnehmer der Sensoreinrichtung 15 elektrisch verbunden und führt eine Überwachung bzw. Analyse des Ausgangssignals des Aufnehmers dergestalt durch, dass die erste erfasste Messgröße (Verschleiß) und die zweite erfasste Messgröße (Betätigungshub) von einander getrennt weitergeleitet und ausgewertet werden können. Dies wird wie die Auswerteeinheit 23 unten noch näher erläutert.

Fig. 3 zeigt eine schematische grafische Darstellung eines Betätigungshubs B und einer Betätigungsgeschwindigkeit B10.

Der Betätigungshub B, hier wie oben bereits beschrieben eine Schwenkbewegung des Bremsdrehhebels, ist über der Zeit t aufgetragen. Dabei ist auf der Ordinate ein Verstellweg x dargestellt, wobei das Lüftspiel mit der Bezeichnung x_{LS} versehen ist.

Die Betätigungsgeschwindigkeit B10 ist zeitidentisch mit dem Betätigungshub B darunter über der Zeit t dargestellt, wobei auf der Ordinate die erste Ableitung des Verstellwegs x nach der Zeit t mit der Bezeichnung dx/dt aufgetragen ist.

Beim Betätigen der Scheibenbremse 1, die beispielsweise druckluftbetätigt ist, betätigt der Fahrer das Bremspedal, was zu einem Zeitpunkt t_{START} erfolgt. Dann wird vom Fahrzeugsteuersystem 21 ein Arbeitsdruck (Druckluft) in einen Druckarbeitszylinder eingesteuert. Der Druckarbeitszylinder ist mit dem Hebelarm 9b des Bremsdrehhebels 9 (siehe Fig. 2) gekoppelt. Ein Kolben in dem Druckarbeitszylinder wandelt den Druck in eine (annähernd) lineare Bewegung um und wirkt auf den Hebelarm 9b des Bremsdrehhebels 9 und weiter auf den Betätigungsmechanismus der Scheibenbremse 1. In dem gezeigten Ausführungsbeispiel wirkt der Bremsdrehhebel 9 auf die Brücke 7 und wie oben beschrieben auf die Bremsbeläge 3.

Der Betätigungsmechanismus (d.h. die Brücke 7) und der Kolben sind mittels Federelementen (z.B. wirkt Rückstellfeder 8 auf die Brücke 7, Fig. 1) gegen die Betätigungsrichtung vorgespannt. Zusätzlich wirken Reibkräfte an den beweglichen Teilen. Bis der Arbeitsdruck im Druckarbeitszylinder diese Vorspann- und Reibkräfte überwunden hat, wird sich die Betätigungsmechanik nicht bewegen, d.h. der Verstellweg x ist gleich Null.

Das Druckniveau, bei welchem sich der Betätigungsmechanismus aus seiner Ausgangslage bewegt, wird als Ansprechdruck bezeichnet. Dies ist in einem Zeitpunkt t₁ der Fall. Der Betätigungsmechanismus durchläuft nun das Lüftspiel x_{LS} und drückt die Bremsbeläge 3 gegen die Bremsscheibe 2. Das Druckniveau, bei dem der erste Bremsbelag 3 die Bremsscheibe 2 berührt, wird als Anlegedruck bezeichnet. Damit ist der Reibepunkt B1 zu einem Zeitpunkt t₂ bzw. t_{K} erreicht.

Infolge der Kräfte- und Massenverhältnisse wird der Betätigungsmechanismus im Bereich des Lüftspiels x_{LS} sehr schnell beschleunigt. Dies ist in dem Kurvenverlauf der Betätigungsgeschwindigkeit B10 mit einer starken Steigung dargestellt. Mit dem Aufschlagen des ersten Bremsbelags 3 auf der Bremsscheibe 2 wird der Betätigungsmechanismus schlagartig abgebremst. Dies ist im Reibepunkt B1 der Fall, wobei der Kurvenverlauf der Betätigungsgeschwindigkeit B10 zu diesem Zeitpunkt t_{K} ein Maximum B11 aufweist.

In einem weiteren Zeitpunkt t3 ist die Bewegung der Betätigungsmechanik, d.h. die Betätigungsgeschwindigkeit B10 zu Null geworden. Dabei nimmt der Betätigungshub B1 einen konstanten Wert ein, was zum Zeitpunkt t_{REC} der Fall ist. Der Zeitpunkt t_{REC} wird unten noch weiter erläutert.

Die erfindungsgemäße Vorrichtung 20 zur Ermittlung des Lüftspiels dient zur Durchführung eines Verfahrens zum Ermitteln des Lüftspiels mittels einer Datenpaarung von Betätigungshub B und Zeit t. Dabei wird in dem Zeitpunkt t₂ bzw. tₖ, bei dem der erste Bremsbelag 3 mit der Bremsscheibe 2 in Kontakt kommt, z.B. die erste oder zweite zeitliche Ableitung des Verstellwegs x bestimmt. Dieser Zeitpunkt t₂ bzw. tₖ kann z.B. mit einem geeigneten Algorithmus anhand des Maximums B11 der ersten Ableitung in einem gewissen Zeitfenster bestimmt werden. Mit der Betätigungshub B - Zeit t - Datenpaarung und dem Zeitpunkt t₂ bzw. tₖ ist es dann anschließend möglich, das Lüftspiel x_{LS} zu ermitteln. Dies wird unten noch im Detail erläutert.

In Fig. 4 ist eine schematische Blockdarstellung der erfindungsgemäßen Fahrzeugbremse nach Fig. 2 mit der erfindungsgemäßen Vorrichtung 20 dargestellt.

Die Überwachungseinheit 22 der Vorrichtung 20 ist hier in der Sensoreinrichtung 15 an dem Bremssattel 4 der Scheibenbremse 1 integriert und mit der Anschlussleitung 15b mit der Auswerteeinheit 23 verbunden. Die Auswerteeinheit 23 ist über eine Übertragungsleitung 23a mit dem Fahrzeugsteuerungssystem 21 verbunden.

Aus Fig. 3 ist ersichtlich, dass die Zeitpunkte t₁ beim Erreichen des Ansprechdrucks und t₂ bzw. t_{K} beim Erreichen des Anlegedrucks sehr nahe beieinander liegen. Das Messsignal, welches die Überwachungseinheit 22 von dem Aufnehmer der Sensoreinrichtung 15 liefert, ist ein analoges Messsignal. Dieses analoge Messsignal wird zur Weiterleitung und Weiterverarbeitung von der Auswerteeinheit 23 in ein digitales Messsignal umgesetzt werden. Aufgrund des kurzen Zeitabstands der Zeitpunkte t₁ und t₂ bzw. t_{K} ist eine Analog-/Digital-Umsetzung (A/D-Umsetzung) des analogen Messsignals mit einer sehr hohen Frequenz erforderlich, um den Zeitpunkt t_{K} mit einer ausreichenden Genauigkeit zu erfassen. Zur Minimierung eines Einflusses der Anschlussleitung 15b (RC-Konstante) zwischen der Überwachungseinheit 22 und der Auswerteeinheit 23 sollte der Weg der analogen Übertragung möglichst kurz sein. Daher kann die Auswerteeinheit 23 in unmittelbarer Nähe der Überwachungseinheit 22 angeordnet bzw. sogar als ein Bestandteil der Überwachungseinheit 22 ausgebildet sein.

Die Auswerteeinheit 23 führt eine A/D- Umsetzung des analogen Messsignals der Überwachungseinheit 22 durch und überträgt das Messsignal in digitaler Form über die Übertragungsleitung 23a an das Fahrzeugssteuerungssystem 21.

Die Vorrichtung 20 zur Ermittlung des Lüftspiels der Fahrzeugbremse bzw. Scheibenbremse 1 ist zur Durchführung eines Verfahrens zum Ermitteln des Lüftspiels ausgebildet.

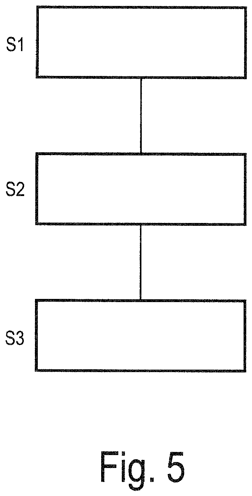

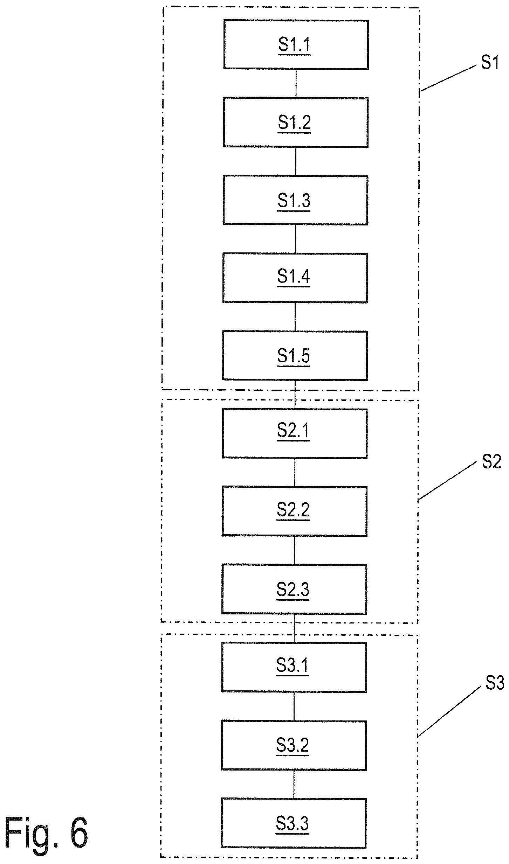

In den Figuren 5 und 6 sind beispielhafte Flussdiagramme des erfindungsgemäßen Verfahrens gezeigt. Fig. 5 stellt ein beispielhaftes Flussdiagramm in drei Verfahrensschritten dar, wobei Fig. 6 weitere Teilschritte dazu zeigt.

In einem ersten Verfahrensschritt S1 Aufnehmen wird bei einem Bremsvorgang der Betätigungshub B in einem Zeitfenster t_{START}-t_{REC} aufgenommen und mit der zugehörigen Zeit t als Datenpaare Betätigungshub B/Zeit t gespeichert. Das Aufnehmen erfolgt in diesem Ausführungsbeispiel durch die Sensoreinrichtung 15. Dann wird dieses aufgenommene Messsignal der Überwachungseinheit 22 als analoges Messsignal des Betätigungshubs B der Zuspannvorrichtung der Scheibenbremse 1 an die Auswerteeinheit 23 weitergeleitet. Die Auswerteeinheit 23 setzt das analoge Messsignal mit einer hohen Abtastrate in ein digitales Messsignal um und speichert es dabei. Am Ende des Zeitfensters t_{START}-t_{REC} werden die gespeicherten Daten des Messsignals zur weiteren Verarbeitung bereitgestellt.

Die weitere Verarbeitung der gespeicherten Messdaten erfolgt in einem zweiten Verfahrensschritt S2, wobei eine zeitliche Ableitung des Messsignals in dem Zeitfenster t_{START}-t_{REC} mit einem geeigneten Algorithmus zur Bestimmung des Zeitpunkts t₂ bzw. t_{K} bei dem Maximum B11 (siehe Fig. 3) von der Auswerteinheit 23 durchgeführt wird.

In einem dritten Verfahrensschritt S3 wird das Lüftspiel x_{LS} anhand des so bestimmten Zeitpunkts t₂ bzw. t_{K} gemäß dem aufgenommenen Betätigungshub (siehe Fig. 3) ermittelt. Diese Ermittlung erfolgt auch in der Auswerteeinheit 23. Der so ermittelte Wert des Lüftspiels x_{LS} wird dann an das Fahrzeugsteuerungssystem 21 weitergeleitet, z.B. zur Anzeige für den Fahrer.

Der Betätigungshub B kann wie oben beschrieben von der Sensoreinrichtung 15 erfasst werden. Es ist natürlich auch möglich, dass ein anderer Parameter der Fahrzeugbremse, welcher den Betätigungshub direkt oder auch indirekt repräsentiert, z.B. ein Verstellweg des Kolbens des Druckarbeitszylinders oder der Brücke 7, gemessen wird. Selbstverständlich sind auch andere Messmöglichkeiten dafür möglich.

Fig. 6 zeigt die Verfahrensschritte S1...S3 aus Fig. 5 mit weiteren Teilschritten.

So umfasst der Verfahrensschritt S1 fünf Teilschritte S1.1 bis S1.5.

In einem ersten Teilschritt S1.1 wird bei einem Bremsvorgang, der durch den Fahrer durch eine Betätigung des Bremspedals eingeleitet wird, dieser Zeitpunkt erkannt und als Zeitpunkt t_{START} (siehe Fig. 3) für den Beginn des Zeitfensters t_{START}-t_{REC} festgelegt.

Bei Beginn des Zeitfensters t_{START}-t_{REC} bestromt das Bremssteuerungssystem, das sich z.B. im Fahrzeugsteuerungssystem 21 befindet, die Überwachungseinheit 22 in dem zweiten Teilschritt S1.2.

Die so aktivierte Überwachungseinheit 22 beginnt in dem dritten Teilschritt S1.3, das Ausgangssignal des Betätigungshubs B, hier das Messsignal, des Aufnehmers der Sensoreinrichtung 15 an die Auswerteeinheit 23 zu übertragen.

Zeitgleich mit dem Bestromen der Überwachungseinheit 22 beginnt die Auswerteeinheit 23 in einem vierten Teilschritt S1.4 das Umsetzen des analogen Messsignals des Betätigungshubs B mit einer hohen Abtastrate in ein digitales Messsignals und speichert es in einer dafür vorgesehenen Speichereinrichtung mit der zugeordneten Zeit t als Datenpaare Betätigungshub B/Zeit t.

In dem fünften Teilschritt S1.5 wird das Aufnehmen, Umsetzen und Speichern des Messsignals für die vorher festgelegte Zeit des Zeitfensters t_{START}-t_{REC} bis zum vorher festgelegten Zeitpunkt t_{REC} fortgeführt.

Ist bis zu diesem Endzeitpunkt t_{REC} der Bremsvorgang noch nicht abgeschlossen, was durch Abfrage der Bremspedalstellung und des Betätigungshubs B ermittelbar ist, nämlich bei Bremspedalstellung=0 und Betätigungshub B=0, wird das weitere Aufnehmen und Speichern unterbrochen, und die bis zu dem Zeitpunkt t_{REC} gespeicherten Datenpaare Betätigungshub B/Zeit t werden zur weiteren Verarbeitung bereitgestellt.

Wird der Bremsvorgang innerhalb des Zeitfensters t_{START}-t_{REC} abgeschlossen, d.h. zu einem Zeitpunkt t_{START} < t₄ < -t_{REC} so wird das Aufnehmen und Speichern zu diesem Zeitpunkt t₄ unterbrochen, und die gespeicherten Datenpaare Betätigungshub B/Zeit t werden zur weiteren Verarbeitung bereitgestellt.

In einem ersten Teilschritt S2.1 werden nun die gespeicherten Datenpaare durch Glätten und Filtern von der Auswerteeinheit 23 aufbereitet. Dabei kann auch eine Verstärkung der Datenpaare erfolgen.

Die zeitliche Ableitung des Messsignals in dem Zeitfenster t_{START}-t_{REC} mit einem geeigneten Algorithmus in einem zweiten Teilschritt S2.2 durch die Auswerteeinheit 23.

Dann wird in einem dritten Teilschritt der Zeitpunkt t₂ bzw. t_{K} bei dem Maximum B11 auch durch die Auswerteeinheit 23 bestimmt.

In einem ersten Teilschritt S3.1 des dritten Verfahrensschritts S3 wird anhand des so bestimmten Zeitpunkts t₂ bzw. t_{K} und anhand der aufgenommenen und gespeicherten Datenpaare Betätigungshub B/Zeit t des Betätigungshubs B (siehe Fig. 3) der Wert des Lüftspiels x_{LS} von der Auswerteeinheit 23 ermittelt. Dabei wird als Zeit t der Zeitpunkt t₂ bzw. t_{K} benutzt und der dazu zugehörige gespeicherte Betätigungshub B ausgelesen.

Es erfolgt dann eine Anpassung des ermittelten Wertes des Lüftspiels x_{LS} in einem zweiten Teilschritt S3.2 zur Weiterleitung von der Auswerteeinheit 23 an das Fahrzeugsteuerungssystem 21.

In einem dritten Teilschritt wird der so ermittelte und angepasste Wert des Lüftspiels x_{LS} von dem Fahrzeugsteuerungssystem 21 für den Fahrer angezeigt und in geeigneter Form durch eine digitale Übertragung über einen fahrzeuginternen Bus, beispielsweise CAN/B, an das zentrale Steuergerät des Fahrzeugsteuerungssystem 21 zur Speicherung und späteren Auswertung, z.B. für Diagnose und Wartung, weitergeleitet.

Auf diese Weise ist das Lüftspiel der Fahrzeugbremse, z.B. der oben beschriebenen Scheibenbremse 1, exakt und robust, d.h. ohne Einfluss von Störgrößen, bestimmbar.

Das Verfahren eignet sich sowohl für eine Scheibenbremse als auch für eine Trommelbremse

Die Erfindung wird durch das oben beschriebene Ausführungsbeispiel nicht eingeschränkt, sondern ist im Rahmen der beigefügten Ansprüche modifizierbar.

Es ist denkbar, dass die Übertragung des digitalen Messsignals des Betätigungshubs über die Übertragungsleitung auch eine optische Übertragung sein kann.

Die Auswerteeinheit 23 kann auch in der Sensoreinrichtung 15 zusammen mit der Überwachungseinheit 22 angeordnet sein.

Es ist auch denkbar, dass die Auswerteeinheit 23 in dem Fahrzeugsteuerungssystem 21 angeordnet ist, wobei die Anschlussleitung 15b zur Übertragung des analogen Messsignals dazu besonders störungsarm und einstrahlungsunempfindlich ausgebildet ist. Hierbei kann es auch möglich sein, dass eine A/D-Umsetzung des analogen Messsignals des Aufnehmers der Sensoreinrichtung 15 in der Überwachungseinheit 22 angeordnet ist, und die Auswerteeinheit 23 schon ein digitales Messsignal erhält.

Eine drahtlose Übertragung des Messsignals ist ebenfalls vorstellbar, wobei z.B. eine optische Übertragung möglich ist.

### Bezugszeichenliste

- 1: Scheibenbremse
- 2: Bremsscheibe
- 2a: Bremsscheibenachse
- 3: Bremsbelag
- 3a: Bremsbelagträger
- 4: Bremssattel
- 5, 5': Spindeleinheit
- 5a: Nachstellerachse
- 5'a: Mitnehmerachse
- 6, 6': Gewinderohr
- 6a, 6'a: Druckstück
- 7: Brücke
- 8: Rückstellfeder
- 9: Bremsdrehhebel
- 9a: Hebelschwenkachse
- 9b: Hebelarm
- 10: Verschleißnachstellvorrichtung
- 11: Nachstelleinrichtung
- 11a: Nachstellerwelle
- 12: Mitnehmer
- 12a: Mitnehmerwelle
- 13: Synchroneinheit
- 13a, 13'a: Synchronrad
- 13b: Synchronmittel
- 14: Nachstellerantrieb
- 14a: Betätiger
- 14b: Nachstellerantriebselement
- 15: Sensoreinrichtung
- 15a: Sensorachse
- 15b: Anschlussleitung
- 16: Sensorgetriebe
- 17: Hubsensorantrieb
- 18: Hubsensorbetätiger
- 19: Hubsensorantriebseinheit
- 20: Vorrichtung
- 21: Fahrzeugsteuerungssystem
- 22: Überwachungseinheit
- 23: Auswerteeinheit
- 23a: Übertragungsleitung
- B: Betätigungshub
- B1: Reibepunkt
- B10: Betätigungsgeschwindigkeit
- B11: Maximum
- S1...S3: Verfahrensschritt
- S1.1...1.5, S2.1-2.3, S3.1-3.3: Teilschritt
- t: Zeit
- x: Verstellweg
- x_{LS}: Lüftspiel

## Patentansprüche

1. Verfahren zum Ermitteln eines Lüftspiels (x_{LS}) einer Fahrzeugbremse, insbesondere für ein Kraftfahrzeug, wobei die Fahrzeugbremse eine Zuspannvorrichtung, eine Verschleißnachstellvorrichtung (10), eine Sensoreinrichtung (15) zur Erfassung eines Betätigungshubs (B) der Zuspannvorrichtung und ein Fahrzeugsteuerungssystem (21) aufweist, **gekennzeichnet durch** die Verfahrensschritte:
(S1) Aufnehmen eines Messsignals des Betätigungshubs (B), welches von der Sensoreinrichtung (15) bereitgestellt wird, innerhalb eines vorher festlegbaren Zeitfensters (t_{START}-t_{REC}) und Speichern des Messsignals als Datenpaare Betätigungshub-Zeit während eines Bremsvorgangs;
(S2) Bilden einer zeitlichen Ableitung des Messsignals in dem Zeitfenster (t_{START}-t_{REC}) mit einem geeigneten Algorithmus zur Bestimmung eines Zeitpunkts (t₂ bzw. t_{K}) bei einem Maximum (B11); und
(S3) Ermitteln des Lüftspiels (x_{LS}) anhand des so bestimmten Zeitpunkts (t₂ bzw. t_{K}) und Weiterleiten des so ermittelten Wertes des Lüftspiels (x_{LS}) an das Fahrzeugsteuerungssystem (21).

2. Verfahren nach Anspruch 1, **dadurch gekennzeichnet, dass** das von der Sensoreinrichtung (15) bereitgestellte Messsignal des Betätigungshubs (B) von einer Überwachungseinheit (22) als analoges Messsignal an eine Auswerteeinheit (23) übertragen wird.

3. Verfahren nach Anspruch 2, **dadurch gekennzeichnet, dass** der Verfahrensschritt (S1) Aufnehmen die Teilschritte aufweist:
(S1.1) Festlegen eines Beginns (T_{START}) des Zeitfensters (t_{START}-t_{REC}) durch den Beginn eines Bremsvorgangs, der durch einen Fahrer durch eine Betätigung des Bremspedals eingeleitet wird;
(S1.2) Aktivieren der Überwachungseinheit (22) zu Beginn des Zeitfensters (t_{START}-t_{REC}) durch ein Bremssteuerungssystem, das sich im Fahrzeugsteuerungssystem (21) befindet;
(S1.3) Übertragen des analogen Messsignals durch die so aktivierte Überwachungseinheit (22) an die Auswerteeinheit (23);
(S1.4) Umsetzen des übertragenen analogen Messsignals des Betätigungshubs (B) durch die Auswerteeinheit (23) in ein digitales Messsignal und Speichern dieses digitalen Messsignals als Datenpaare Betätigungshub-Zeit; und
(S1.5) Fortführen des Teilschritts (S1.4) Umsetzen und Speichern des Messsignals als Datenpaare Betätigungshub-Zeit durch die Auswerteeinheit (23) für die vorher festgelegte Zeit des Zeitfensters (t_{START}-t_{REC}).

4. Verfahren nach Anspruch 3, **dadurch gekennzeichnet, dass** in dem Teilschritt (S1.4) Umsetzen und in dem Teilschritt (S1.5) Fortführen das Umsetzen des übertragenen analogen Messsignals des Betätigungshubs (B) in ein digitales Messsignal mit einer hohen Abtastrate erfolgt.

5. Verfahren nach Anspruch 3 oder 4, **dadurch gekennzeichnet, dass** in dem Teilschritt (S1.5) Fortführen das Umsetzen und Speichern des Messsignals als Datenpaare Betätigungshub-Zeit an einem Endzeitpunkt (t_{REC}) des vorher festgelegten Zeitfensters (t_{START}-t_{REC}) unterbrochen wird, wenn der begonnene Bremsvorgang noch nicht abgeschlossen ist.

6. Verfahren nach Anspruch 3 oder 4, **dadurch gekennzeichnet, dass** in dem Teilschritt (S1.5) Fortführen das Umsetzen und Speichern als Datenpaare Betätigungshub-Zeit des Messsignals zu dem Zeitpunkt (t₄) unterbrochen wird, an welchem der begonnene Bremsvorgang innerhalb des vorher festgelegten Zeitfensters (t_{START}-t_{REC}) abgeschlossen wird.

7. Verfahren nach einem der Ansprüche 3 bis 6, **dadurch gekennzeichnet, dass** der Verfahrensschritt (S2) Bilden einer zeitlichen Ableitung folgende Teilschritte aufweist:
(S2.1) Aufbereiten der gespeicherten Daten des Messsignals durch die Auswerteeinheit (23) durch Glätten und Filtern der gespeicherten Daten des Messsignals der Datenpaare Betätigungshub-Zeit;
(S2.2) Bilden der zeitlichen Ableitung der gespeicherten Daten des Messsignals der Datenpaare Betätigungshub-Zeit in dem Zeitfenster (t_{START}-t_{REC}) mit einem geeigneten Algorithmus durch die Auswerteeinheit (23); und
(S2.3) Bestimmen des Zeitpunkts (t₂ bzw. t_{K}) bei dem Maximum (B11) der so gebildeten zeitlichen Ableitung durch die Auswerteeinheit (23).

8. Verfahren nach einem der Ansprüche 3 bis 7, **dadurch gekennzeichnet, dass** der Verfahrensschritt (S3) Ermitteln des Lüftspiels (x_{LS}) folgende Teilschritte aufweist:
(S3.1) Ermitteln des Wertes des Lüftspiels (x_{LS}) anhand des Zeitpunkts (t₂ bzw. t_{K}) und anhand der gespeicherten Datenpaare Betätigungshub-Zeit von der Auswerteeinheit (23);
(S3.2) Anpassen des so ermittelten Wertes des Lüftspiels (x_{LS}) durch die Auswerteeinheit (23) zur Weiterleitung von der Auswerteeinheit (23) an das Fahrzeugsteuerungssystem (21); und
(S3.3) Anzeigen des ermittelten und angepassten Wertes des Lüftspiels (x_{LS}).

9. Verfahren nach Anspruch 8, **dadurch gekennzeichnet, dass** der ermittelte und angepasste Wert des Lüftspiels (x_{LS}) von dem Fahrzeugsteuerungssystem (21) an ein zentrales Steuergerät des Fahrzeugsteuerungssystems (21) zur Speicherung und späteren Auswertung übertragen wird.

10. Fahrzeugbremse, insbesondere für ein Kraftfahrzeug, aufweisend eine Zuspannvorrichtung, eine Verschleißnachstellvorrichtung (10), eine Sensoreinrichtung (15) zur Erfassung eines Betätigungshubs (B) der Zuspannvorrichtung, ein Fahrzeugsteuerungssystem (21) und eine Vorrichtung (20) zur Ermittlung eines Lüftspiels (x_{LS}), **dadurch gekennzeichnet, dass** die Vorrichtung (20) zur Ermittlung des Lüftspiels (x_{LS}) zur Durchführung eines Verfahrens nach einem der vorhergehenden Ansprüche ausgebildet ist.

11. Fahrzeugbremse nach Anspruch 10, **dadurch gekennzeichnet, dass** die Vorrichtung (20) zur Ermittlung des Lüftspiels (x_{LS}) die Sensoreinrichtung (15), eine mit der Sensoreinrichtung (15) gekoppelten Überwachungseinheit (22) und eine mit dem Fahrzeugsteuerungssystem (21) gekoppelte Auswerteeinheit (23) umfasst.

12. Fahrzeugbremse nach Anspruch 11, **dadurch gekennzeichnet, dass** die Überwachungseinheit (22) mit einem Aufnehmer der Sensoreinrichtung (15) elektrisch verbunden und für eine analoge Übertragung des aufgenommenen Messsignals des Aufnehmers an die Auswerteeinheit (23) ausgebildet ist.

13. Fahrzeugbremse nach Anspruch 11, **dadurch gekennzeichnet, dass** die Überwachungseinheit (22) mit einem Aufnehmer der Sensoreinrichtung (15) elektrisch verbunden ist, für eine Überwachung bzw. Analyse des Ausgangssignals des Aufnehmers dergestalt ausgebildet ist, dass, wenn der Aufnehmer für zwei unterschiedliche Messgrößen bereitstellt, die Überwachungseinheit (22) die erfasste Messgröße des Betätigungshubs (B) von der anderen erfassten Messgröße trennt und für eine analoge Übertragung des aufgenommenen und getrennten Messsignals des Aufnehmers an die Auswerteeinheit (23) ausgebildet ist.

14. Fahrzeugbremse nach einem der Ansprüche 11 bis 13, **dadurch gekennzeichnet, dass** die Auswerteeinheit (23) für eine Umsetzung des übertragenen analogen Messsignals des Betätigungshubs (B) durch die Auswerteeinheit (23) in ein digitales Messsignal als A/D (Analog/Digital) -Umsetzer und Speichern dieses digitalen Messsignals in Form von Datenpaaren Betätigungshub-Zeit in einer Speichereinrichtung ausgebildet ist.

15. Fahrzeugbremse nach Anspruch 14, **dadurch gekennzeichnet, dass** die Auswerteeinheit (23) für eine Bildung der zeitlichen Ableitung der gespeicherten Daten des Messsignals des Betätigungshubs (B) der Datenpaare Betätigungshub-Zeit und für ein Bestimmen eines Zeitpunkts (t₂ bzw. t_{K}) bei dem Maximum (B11) der gebildeten zeitlichen Ableitung ausgebildet ist.

16. Fahrzeugbremse nach einem der Ansprüche 11 bis 15, **dadurch gekennzeichnet, dass** die Fahrzeugbremse eine druckluftbetätigte Scheibenbremse (1) ist.

## Claims

1. A method for determining a clearance (x_{LS}) of a vehicle brake, in particular for a motor vehicle, wherein the vehicle brake has a brake-application device, a wear adjustment device (10), a sensor means (15) for detecting a stroke (B) of the brake-application device and a vehicle control system (21), **characterised by** the following method steps:
(S1) recording a measurement signal of the stroke (B) that is provided by the sensor means (15) within a previously specified time window (t_{START}-t_{REC}) and storing the measurement signal as stroke / time data pairs during a braking process;
(S2) forming a time derivative of the measurement signal in the time window (t_{START}-t_{REC}) with a suitable algorithm for determining a point in time (t₂ or tₖ) at a maximum (B11); and
(S3) determining the clearance (x_{LS}) using the thus determined point in time (t₂ or tₖ) and forwarding the thus determined value of the clearance (x_{LS}) to the vehicle control system (21).

2. The method according to claim 1, **characterised in that** the measurement signal of the stroke (B) provided by the sensor means (15) is transmitted from a monitoring unit (22) to an evaluation unit (23) as an analogue measurement signal.

3. The method according to claim 2, **characterised in that** the recording step of the method (S1) has the sub-steps:
(S1.1) determining a start (t_{START}) of the time window (t_{START}-t_{REC}) through the start of a braking process that is initiated by a driver activating the brake pedal;
(S1.2) activating the monitoring unit (22) at the start of the time window (t_{START}-t_{REC}) by a brake control system that is located within the vehicle control system (21);
(S1.3) transmission of the analogue measurement signal via the thus activated monitoring unit (22) to the evaluation unit (23);
(S1.4) conversion of the transmitted analogue measurement signal of the stroke (B) by the evaluation unit (23) into a digital measurement signal and storing said digital measurement signal as stroke / time data pairs; and
(S1.5) continuation of the sub-step (S1.4) for the conversion and storage of the measurement signal as stroke / time data pairs by means of the evaluation unit (23) for the previously determined time of the time window (t_{START}-t_{REC}).

4. The method according to claim 3, **characterised in that**, in the conversion sub-step (S1.4) and in the continuation sub-step (S1.5), the conversion of the transmitted analogue measurement signal of the stroke (B) into a digital measurement signal is carried out with a high sampling rate.

5. The method according to claim 3 or 4, **characterised in that**, in the continuation sub-step (S1.5), the conversion and storage of the measurement signal as stroke / time data pairs are interrupted at an end point in time (t_{REC}) of the previously determined time window (t_{START}-t_{REC}) if the initiated braking process has not yet ended.

6. The method according to claim 3 or 4, **characterised in that**, in the continuation sub-step (S1.5), the conversion and storage of the measurement signal as stroke / time data pairs are interrupted at the point in time (t₄), at which the initiated braking process has ended within the previously determined time window (t_{START}-t_{REC}).

7. The method according to any one of claims 3 to 6, **characterised in that** the method step (S2) of forming a time derivative has the following sub-steps:
(S2.1) processing the stored measurement signal data by the evaluation unit (23) by smoothing and filtering the stored measurement signal data of the stroke / time data pairs;
(S2.2) forming the time derivative of the stored measurement signal data of the stroke / time data pairs in the time window (t_{START}-t_{REC}) with a suitable algorithm by the evaluation unit (23); and (S2.3) determining the point in time (t₂ or t_{K}) at the maximum (B11) of the thus formed time derivative by the evaluation unit (23).

8. The method according to any one of claims 3 to 7, **characterised in that** the method step (S3) of determining the clearance (x_{LS}) has the following sub-steps:
(S3.1) determining the value of the clearance (x_{LS}) using the point in time (t₂ or t_{K}) and using the stored stroke / time data pairs by means of the evaluation unit (23);
(S3.2) adapting the thus determined value of the clearance (x_{LS}) by means of the evaluation unit (23) for forwarding from the evaluation unit (23) to the vehicle control system (21); and
(S3.3) displaying the determined and adapted value of the clearance (x_{LS}).

9. The method according to claim 8, **characterised in that** the determined and adapted value of the clearance (x_{LS}) is transmitted from the vehicle control system (21) to a central controller of the vehicle control system (21) for storage and subsequent evaluation.

10. A vehicle brake, in particular for a motor vehicle, having a brake-application device, a wear adjustment device (10), a sensor means (15) for detecting a stroke (B) of the brake-application device, a vehicle control system (21) and a device (20) for determining a clearance (x_{LS}), **characterised in that** the device (20) for determining the clearance (x_{LS}) is designed to carry out a method according to any one of the preceding claims.

11. The vehicle brake according to claim 10, **characterised in that** the device (20) for determining the clearance (x_{LS}) comprises the sensor means (15), a monitoring unit (22) coupled to the sensor means (15) and an evaluation unit (23) coupled to the vehicle control system (21).

12. The vehicle brake according to claim 11, **characterised in that** the monitoring unit (22) is electrically connected to a recorder of the sensor means (15) and is designed for analogue transmission of the recorded measurement signal of the recorder to the evaluation unit (23).

13. The vehicle brake according to claim 11, **characterised in that** the monitoring unit (22) is electrically connected to a recorder of the sensor means (15), is designed for monitoring or analysis of the output signal of the recorder in such a way that, if the recorder provides two different measured variables, the monitoring unit (22) separates the detected measured variable of the stroke (B) from the other detected measured variable, and is designed for an analogue transmission of the recorded and separated measurement signal of recorder to the evaluation unit (23).

14. The vehicle brake according to any one of claims 11 to 13, **characterised in that** the evaluation unit (23) is designed, for the conversion of the transmitted analogue measurement signal of the stroke (B) by means of the evaluation unit (23) into a digital measurement signal, as an A/D (analogue/digital) converter and for storing this digital measurement signal in the form of stroke / time data pairs in a memory device.

15. The vehicle brake according to claim 14, **characterised in that** the evaluation unit (23) is designed for forming the time derivative of the stored measurement signal data of the stroke (B) of the stroke / time data pairs and for determining a point in time (t₂ or t_{K}) at the maximum (B11) of the time derivative that was formed.

16. The vehicle brake according to any one of claims 11 to 15, **characterised in that** the vehicle brake is a pneumatically activated disc brake (1).

## Revendications

1. Procédé de détermination d'un jeu (X_{LS}) d' un frein de véhicule, notamment d'un véhicule automobile, dans lequel le frein du véhicule a un dispositif de serrage, un dispositif (10) de rattrapage d'usure, un dispositif (15) de capteur pour détecter une course (B) d'actionnement du dispositif de serrage et un système (21) de commande du véhicule, **caractérisé par** les stades de procédé :
(S1) réception d'un signal de mesure de la course (B) d'actionnement, qui est mis à disposition par le dispositif (15) de capteur, dans un créneau (t_{START}-t_{REC}) temporel pouvant être fixé à l'avance et mémorisation du signal de mesure comme paire de données, course d'actionnement-temps pendant une opération de freinage ;
(S2) Formation d'une dérivée en fonction du temps de signal de mesure dans le créneau (t_{START}-t_{REC}) temporel, par un algorithme approprié de détermination d'un instant (t₂ ou t_{K}) pour un maximum (B11) et
(S3) détermination du jeu (X_{LS}) à l'aide de l'instant (t₂ ou t_{K}) ainsi déterminé et acheminement de la valeur du jeu (X_{LS}) ainsi déterminée au système (21) de commande du véhicule.

2. Procédé suivant la revendication 1, **caractérisé en ce que** l'on transmet le signal de mesure, mis à disposition par le dispositif (15) de capteur, de la course (B) d'actionnement, d'une unité (22) de contrôle, sous la forme d'un signal de mesure analogique, à une unité (23) d'exploitation.

3. Procédé suivant la revendication 2, **caractérisé en ce que** la réception du stade (S1) de procédé comporte les sous-stades :
(S1.1) fixation d'un début (t_{START}) du créneau (t_{START}-t_{REC}) temporel par le début d'une opération de freinage, initiée par un conducteur par un actionnement de la pédale de frein,;
(S1.2) activation de l'unité (22) de contrôle au début du créneau (t_{START}-t_{REC}) temporel par un système de commande de frein, qui se trouve dans le système (21) de commande du véhicule ;
(S1.3) transmission du signal de mesure analogique à l'unité (23) d'exploitation par l'unité (22) de contrôle ainsi activée ;
(S1.4) transformation du signal de mesure analogique transmis de la course (B) d'actionnement, par l'unité (23) d'exploitation, en un signal de mesure numérique et mémorisation de ce signal de mesure numérique comme paire de données course d'actionnement-temps et
(S1.5) continuation du sous-stade (S1.4) de transformation et de mémorisation du signal de mesure en paire de données course d'actionnement-temps, par l'unité (23) d'exploitation, pendant le temps fixé à l'avance du créneau (t_{START}-t_{REC}) temporel.

4. Procédé suivant la revendication 3, **caractérisé en ce que**, dans le sous-stade (S1.4) la transformation et dans le sous-stade (S1.5) la continuation de la transformation du signal de mesure analogique transmis de la course (B) d'actionnement en un signal de mesure numérique s'effectue à une grande fréquence d'échantillonnage.

5. Procédé suivant la revendication 3 ou 4, **caractérisé en ce que** dans le sous-stade (S1.5) la continuation de la transformation et de la mémorisation du signal de mesure, sous la forme d'une paire de données course d'actionnement-temps, est interrompue à un instant (t_{REC}) de fin du créneau (t_{START}-t_{REC}) temporel fixé à l'avance, si l'opération de freinage commencée n'est pas encore terminée.

6. Procédé suivant la revendication 3 ou 4, **caractérisé en ce que**, dans le sous-stade (S1.5) la continuation de la transformation et de la mémorisation, sous la forme de paires de données course d'actionnement-temps, du signal de mesure, est interrompue à l'instant (t₄) où on met fin, dans le créneau (t_{START}-t_{REC}) temporel fixé à l'avance, à l'opération de freinage commencée.

7. Procédé suivant l'une des revendications 3 à 6, **caractérisé en ce que** le stade (S2) du procédé de formation d'une dérivée en fonction du temps a les sous-stades suivants :
(S2.1) préparation des données mémorisées du signal de mesure par l'unité (23) d'exploitation, par lissage et filtrage des données mémorisées du signal de mesure des paires de données course d'actionnement-temps ;
(S2.2) formation de la dérivée en fonction du temps des données mémorisées du signal de mesure des paires de données course d'actionnement-temps, dans le créneau (t_{START}-t_{REC}) temporel, par un algorithme approprié par l'unité (23) d'exploitation et
(S2.3) détermination, par l'unité (23) d'exploitation, de l'instant (t₂ ou t_{K}) pour le maximum (B11) de la dérivée en fonction du temps ainsi formée.

8. Procédé suivant l'une des revendications 3 à 7, **caractérisé en ce que** le stade (S3) du procédé de détermination du jeu (X_{LS}) a les sous-stades suivants :
(S3.1) détermination, par l'unité (23) d'exploitation, de la valeur du jeu (X_{LS}) à l'aide de l'instant (t₂ ou t_{K}) et à l'aide des paires de données mémorisées course d'actionnement-temps ;
(S3.2) adaptation de la valeur ainsi déterminée du jeu (X_{LS}) par l'unité (23) d'exploitation pour l'acheminer de l'unité (23) d'exploitation au système (21) de commande du véhicule et
(S3.3) affichage de la valeur déterminée et adaptée du jeu (X_{LS}).

9. Procédé suivant la revendication 8, **caractérisé en ce que** l'on transmet, pour mémorisation et exploitation ultérieure, la valeur déterminée et adaptée du jeu (X_{LS}) du système (21) de commande du véhicule à un système de commande central du système (21) de commande du véhicule.

10. Frein de véhicule, notamment de véhicule automobile, comportant un dispositif de serrage, un dispositif (10) de rattrapage d'usure, un dispositif (15) de capteur, pour détecter une course (B) d'actionnement du dispositif de serrage, un système (21) de commande du véhicule et une installation (20) de détermination d'un jeu (X_{LS}), **caractérisé en ce que** l'installation (20) de détermination du jeu (X_{LS}) est constitué pour effectuer un procédé suivant l'une des revendications précédentes.

11. Frein de véhicule suivant la revendication 10, **caractérisé en ce que** l'installation (20) de détermination du jeu (X_{LS}) comprend le dispositif (15) de capteur, une unité (22) de contrôle couplée au dispositif (15) de capteur et une unité (23) d'exploitation couplée au système (21) de commande du véhicule.

12. Frein de véhicule suivant la revendication 11, **caractérisé en ce que** l'unité (22) de contrôle est reliée électriquement à un récepteur du dispositif (15) de capteur et est constituée pour une transmission analogique du signal de mesure reçu du capteur à l'unité (23) d'exploitation.

13. Frein de véhicule suivant la revendication 11, **caractérisé en ce que** l'unité (22) de contrôle est reliée électriquement à un récepteur du dispositif (15) de capteur et est constituée pour un contrôle et une analyse du signal de sortie du récepteur, de manière à ce que, lorsque le récepteur est préparé pour deux grandeurs de mesure différentes, l'unité (22) de contrôle sépare la grandeur de mesure détectée de la course (B) d'actionnement de l'autre grandeur de mesure détectée et est constituée pour une transmission analogique du signal de mesure reçu et séparé du récepteur à l'unité (23) d'exploitation.

14. Frein de véhicule suivant l'une des revendications 11 à 13, **caractérisé en ce que** l'unité (23) d'exploitation est constituée pour une transformation du signal de mesure analogique transmis de la course (B) d'actionnement en un signal de mesure numérique par l'unité (23) d'exploitation sous la forme d'un convertisseur A/D (analogique/numérique) et pour mémoriser ce signal de mesure numérique sous la forme de paires de données course d'actionnement-temps dans un dispositif de mémorisation.

15. Frein de véhicule suivant la revendication 14, **caractérisé en ce que** l'unité (23) d'exploitation est constituée pour former la dérivée en fonction du temps des données mémorisées du signal de mesure de la course (B) d'actionnement des paires de données course d'actionnement-temps, et pour déterminer un instant (t₂ ou t_{K}) pour le maximum (B11) de la dérivée en fonction du temps qui est formée.

16. Frein de véhicule suivant l'une des revendications 11 à 15, **caractérisé en ce que** le frein de véhicule est un frein (1) à disque à actionnement par l'air comprimé.
